(19) Europäisches Patentamt
European Patent Office
Office européen des brevets

(11) **EP 2 838 179 B1**

(12) **EUROPÄISCHE PATENTSCHRIFT**

(45) Veröffentlichungstag und Bekanntmachung des Hinweises auf die Patenterteilung:
**20.03.2019 Patentblatt 2019/12**

(51) Int Cl.:
*H02J 5/00* *(2016.01)* *H02J 50/12* *(2016.01)*

(21) Anmeldenummer: **14180230.6**

(22) Anmeldetag: **07.08.2014**

(54) **Vorrichtung und Verfahren zur drahtlosen Energieübertragung**

Device and method for the wireless transmission of energy

Dispositif et procédé de transmission sans fil d'énergie

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.08.2013 DE 102013108732**

(43) Veröffentlichungstag der Anmeldung:
**18.02.2015 Patentblatt 2015/08**

(73) Patentinhaber: **WITTENSTEIN SE**
**97999 Igersheim (DE)**

(72) Erfinder: **Friedmann, Jan**
**86920 Denklingen (DE)**

(74) Vertreter: **Zimmermann & Partner**
**Patentanwälte mbB**
**Postfach 330 920**
**80069 München (DE)**

(56) Entgegenhaltungen:
**JP-A- 2011 045 195 US-A1- 2008 082 095**
**US-A1- 2010 063 347 US-A1- 2012 095 531**

## Beschreibung

Gebiet der Erfindung

Die Erfindung betrifft ein Verfahren zur drahtlosen Übertragung von Energie nach dem Anspruch 1 und eine Vorrichtung zur drahtlosen Übertragung von Energie nach dem nebengeordneten Anspruch.

Stand der Technik

Aus dem Stand der Technik sind Energieübertragungssysteme bekannt, welche von einem Primärkreis zu einem Sekundärkreis Energie übertragen können. Ein Beispiel für einen solchen Stand der Technik gibt die WO 2009/091267 A2.

Zur Überwachung der Energieübertragung und zur Einstellung von Sendeleistung oder Sendefrequenz oder anderer Paramater benützen Verfahren aus dem Stand der Technik einen Rückkanal, über welchen Informationen über den Sekundärstrom in der Sekundärspule übertragen werden. An Hand dieser Information kann dann eine Regelung auf der Primärseite vorgenommen werden. Eine solche permanente Datenübermittlung kann Ressourcenverbrauchend sein und die Regelungsgeschwindigkeit oder Regelungsgenauigkeit vermindern, da die Übertragung zu einer Zeitverzögerung führen kann oder Energie verbraucht.

Das Dokument US 2008/082095 A1 offenbart einen elektrochirurgischen Generator mit einer Steuerungseinrichtung zum Durchführen eines elektrochirurgischen Verfahrens. Das Dokument JP 2011 045195 A offenbart eine kontaktlose Stromzuführungseinrichtung für eine Last. Vor der Inbetriebnahme der Stromzuführungseinrichtung wird die Last elektrisch entfernt und durch ein passives Element ersetzt.

Die US 2010/0063347A1 offenbart ein TET-System zur Übertragung elektrischer Energie über die menschliche Haut an eine implantierbare Einheit.

Offenbarung der Erfindung

Aufgabe der Erfindung ist es, verbesserte Vorrichtungen und Verfahren zur Energieübertragung anzugeben. Insbesondere soll eine zuverlässige, flexible oder ressourcenschonende Energieübertragung ermöglicht werden.

Die Aufgabe wird mit einem Verfahren nach Anspruch 1 und einer Vorrichtung nach dem nebengeordneten Anspruch gelöst.

Typische Ausführungsformen der Erfindung betreffen ein Verfahren zur drahtlosen Übertragung von Energie von einer Primäreinrichtung zu einer implantierbaren Sekundäreinrichtung. Die Primäreinrichtung umfasst eine Primärspule, die hierin auch als Primärspule bezeichnet wird, und die Sekundäreinrichtung umfasst eine Sekundärwicklung, welche hierin auch als Sekundärspule bezeichnet wird. Die Sekundärspule und die Primärspule sind für eine elektromagnetische Interaktion vorgesehen, um Energie zu übertragen. Die Sekundäreinrichtung ist insbesondere für einen intrakorporalen Betrieb geeignet oder vorgesehen.

Typische Verfahren sehen vor, dass ein in der Primärspule fließender Primärstrom und eine an der Primärspule anliegende Primärspannung gemessen werden und anhand dieser beiden gemessenen Werte ein Sekundärstrom der Sekundärspule und eine Sekundärspannung der Sekundärspule berechnet werden. Dabei wird typischerweise auf eine berechnete Gegeninduktivität und eine Übertragungsfunktion zurück gegriffen. Bei typischen Ausführungsformen wird der Sekundärstrom oder die Sekundärspannung ausschließlich anhand der gemessenen Werte auf der Primärseite, das heißt dem Primärstrom und der Primärspannung, unter Verwendung von Paramatern der Primäreinrichtung und der Sekundäreinrichtung berechnet. Unter solchen Paramatern sind beispielsweise die folgenden Größen zu verstehen: Kapazität $C\_1$ des Primärkreises, in welchem die Primärspule angeordnet ist, Induktivität $L\_1$ der Primärspule, Kapazität $C\_2$ des Sekundärkreises, in welchem die Sekundärspule angeordnet ist, Widerstand $R\_1$ des Primärkreises, Induktivität $L\_2$ der Sekundärspule, Widerstand $R\_2$ des Sekundärkreises, Resonanzfrequenz f res des Primärkreises und des Sekundärkreises oder als abgeleitete Größe die Gegeninduktivität M.

Typischerweise wird der Sekundärstrom oder die Sekundärspannung berechnet ohne Rückgriff auf Messwerte der Sekundärseite, insbesondere ohne Rückgriff auf einen gemessenen Sekundärstrom oder eine gemessene Sekundärspannung, welche an der Sekundärspule anliegen. Auf diese Weise wird ein Rückkanal überflüssig gemacht oder kann zu Überprüfungs- und Abstimmungszwecken verwendet werden, beispielsweise um zu überprüfen ob die Berechnung richtig ist.

In typischen Verfahren folgt ein Vergleich des berechneten Sekundärstroms mit einem Sekundärsollstrom oder ein Vergleich der berechneten Sekundärspannung mit einer Sekundärsollspannung. In Abhängigkeit dieses Vergleichs oder dieser Vergleiche wird ein Primärsollstrom oder eine Primärsollspannung durch die Primäreinrichtung auf der Primärseite vorgegeben und die Primärspule mit der Primärsollspannung oder dem Primärsollstrom betrieben, um Energie an die Sekundärspule zu übertragen. Weitere Einflussgrößen für die Bestimmung des Primärsollstroms oder der Primärsollspannung sind eine benötigte Energie auf der Gegenseite und Eigenschaften der Übertragungsstrecke wie die Gegeninduktivität.

Typischerweise wird eine Gegeninduktivität der Primärspule zu der Sekundärspule ermittelt. Bei typischen Ausführungsformen wird die Primärspule mit einem vorgegebenen Primärstrom bestromt. Typischerweise wird zum Ermitteln der Gegeninduktivität der Primärstrom konstant gehalten. Weiterhin wird die an der Primärspule anliegende Primärspannung gemessen. Die Übertragungsfunktion oder die Gegeninduktivität werden verwendet, um den Sekundärstrom oder die Sekundärspannung zu berechnen. Die Gegeninduktivität M lässt sich typischerweise durch die Verwendung der folgenden Formel berechnen:

$$M = \left| \frac{\sqrt{I_1 - C_1 U_1 s + C_1 L_1 I_1 s^2 + C_1 R_1 I_1 s} * \sqrt{C_2 R_2 s + C_2 * R_L s + C_2 L_2 s^2 + 1}}{\sqrt{C_1 C_2 I_1 s^4}} \right|$$

wobei

$$\left| \phantom{x} \right. \qquad\qquad s = f_{res} * 2 * \pi * i$$

C, L und R bezeichnen die Kapazität C, die Induktivität L und den Widerstand R des Primärkreises, tiefgestellte "1", und des Sekundärkreises, tiefgestellte "2".

Die Formel ist dabei auf die Verwendung von Serienschwingkreisen angepasst. Bei der Verwendung anderer Topologien wie z.B. Parallelschwingkreisen ist die Formel entsprechend zu ändern.

Mithilfe einer Übertragungsfunktion TF (transfer function), welche ein Verhältnis einer Eingangsgröße zu einer Ausgangsgröße wiedergibt, können bei typischen Ausführungen Sekundärgrößen in Abhängigkeit von Primärgrößen bestimmt werden. Die Übertragungsfunktionen werden aus den systembeschreibenden Differenzialgleichungen abgeleitet, mit Hilfe der Kirchhoffs'chen Maschenregeln:

$$U_1(t) = R_1 I_1 + \frac{1}{C_1} \int I_1 dt + \frac{L_1 dI_1}{dt} - \frac{M dI_1}{dt}$$

$$U_2 = R_2 I_2 + \frac{1}{C_2} \int I_2 dt + \frac{L_2 dI_2}{dt} - \frac{M dI_2}{dt} = 0$$

So wird in typischen Ausführungsformen eine Übertragungsfunktion TF als Verhältnis des Sekundärstroms zu der Primärspannung mit der folgenden Formel berechnet:

$$TF = \frac{I_2}{U_1}$$

mit

$$TF = \frac{as^3}{bs^4 + cs^3 + ds^2 + es - 1}$$

wobei

$$a = -C_1 C_2 M;$$

$$b = C_1 C_2 M^2 - C_1 C_2 L_1 L_2;$$

$$c = -C_1 C_2 L_1 R_2 - C_1 C_2 L_2 R_1 - C_1 C_2 L_1 R_L;$$

$$d = -C_1 L_1 - C_2 L_2 - C_1 C_2 R_2 R_1 - C_1 C_2 R_1 R_L;$$

$$e = -C_1 R_1 - C_2 R_2 - C_2 R_L;$$

$$s = f_{res} * 2 * \pi;$$

Bei weiteren Ausführungsformen werden andere Formeln verwendet, wobei insbesondere Umstellungen der genannten Formeln möglich sind.

Typischerweise wird die Gegeninduktivität oder die Übertragungsfunktion unter Ausschluss eines Rückgriffs auf einen gemessenen Sekundärstrom oder eine gemessene Sekundärspannung berechnet. Bei typischen Ausführungsformen kann jedoch auf übermittelte Messwerte von der Sekundärseite zur Überprüfung der berechneten Gegeninduktivität oder der Übertragungsfunktion zurückgegriffen werden. Typischerweise erfolgt die Regelung unabhängig von einer Echtzeitrückführung eines Messwertes für den Sekundärstrom, auch Sekundärstrom-Messwert genannt, oder unabhängig von einer Echtzeitrückführung eines Messwertes für die Sekundärspannung, auch Sekundärspannungs-Messwert genannt. Typischerweise wird keiner dieser Werte in Echtzeit zurückgeführt. Dies bietet den Vorteil, dass die Regelung schnell sein kann, da auf eine zeitaufwendige Rückführung von Messwerten von der Sekundärseite verzichtet werden kann. Analog gilt dies auch für die Übertragungsfunktion und die Gegeninduktivität, welche bei Ausführungsform unabhängig einer Echtzeitrückführung eines Sekundärstrom-Messwertes oder unabhängig von einer Echtzeitrückführung eines Sekundärspannungs-Messwertes ermittelt werden.

Bei typischen Verfahren von Ausführungsformen wird von der Sekundäreinrichtung zu der Primäreinrichtung eine Information über eine von der Sekundäreinrichtung benötigte Leistung oder eine Information über eine übertragene Leistung übermittelt. Auf diese Weise ist es möglich, die Übertragung von Energie an einen Bedarf anzupassen. Typischerweise überwacht die Sekundäreinrichtung die übertragene Leistung und übermittelt an die Primäreinrichtung eine Information über die übertragene Leistung oder über eine Änderung der übertragenen Leistung. Eine solche Änderung kann insbesondere bei Verrücken der Primäreinrichtung eintreten. Bei typischen Ausführungsformen erfolgt somit nur bei einer Abweichung von einem normalen Betrieb oder in einem Fehlerfall eine Übermittlung von Information von der Sekundärseite zu der Primärseite. Typischerweise werden bei Verfahren der Erfindung Signale an den Benutzer ausgegeben oder ein Benutzer wird aufgefordert die Primäreinrichtung zu repositionieren, falls Informationen über eine Änderung der übertragenen Leistung übermittelt werden. Auf diese Weise ist das Verfahren sehr zuverlässig und wenig fehleranfällig.

Bei typischen Verfahren von Ausführungsformen wird der Vergleich des berechneten Sekundärstroms mit dem Sekundärsollstrom oder der berechneten Sekundärspannung mit der Sekundärsollspannung jeweils als Eingangssignal für einen PI-Regler verwendet, um den Primärsollstrom oder die Primärsollspannung zu ermitteln. Auf diese Weise wird eine Regelschleife geschaffen, die zuverlässig die Sekundäreinrichtung mit Energie versorgt. Bei typischen Ausführungsformen wird die Primärspule mit einem Pulsweitenmodulationsverfahren (PWM-Verfahren) angesteuert. Typischerweise erfolgt die Ansteuerung mit einem Pulsweitenmodulationsverfahren bei typischen Ausführungsformen mit Regelung des Stroms der Primärspule auf einen Primärsollstrom. Bei einigen Ausführungsformen kann eine Vorgabe der Amplitude der Primärsollspannung erfolgen. Auf diese Weise wird eine einfache Ansteuerung mit einfachen Mitteln ermöglicht. Bei der Pulsweitenmodulation werden Pulsweiten von vor allem bis zu 70%, typischerweise bis zu 50% verwendet. In solchen Bereichen existiert ein ausreichend linearer Zusammenhang zwischen dem Primärstrom und dem Tastverhältnis.

Ein weiterer Aspekt der Erfindung betrifft eine Vorrichtung zur drahtlosen Übertragung von Energie mit einer Primäreinrichtung und einer implantierbaren Sekundäreinrichtung wobei die Vorrichtung dazu eingerichtet ist, ein Verfahren in einer der hierin beschriebenen typischen Ausführungsformen auszuführen.

Vorteile von typischen Verfahren gegenüber Verfahren aus dem Stand der Technik sind ein schnelles Regelverhalten und der Wegfall der Notwendigkeit einer schnellen Übertragung von Messwerten von der Sekundäreinrichtung zu der Primäreinrichtung.

Typische Verfahren weisen eine Übertragungsrate für Messwerte der Sekundärseite, beispielsweise der übertragenen Leistung, der Sekundärsollspannung, dem Sekundärstrom, auf, welche kleiner ist als 3 Hertz, typischerweise kleiner als 1 Hertz, bei manchen Ausführungsformen der Erfindung kleiner als 0,5 Hertz. Im Beispiel von 0,5 Hertz würde dies bedeuten, dass lediglich alle 2 Sekunden ein Messwert oder ein Messwertepaar oder ein Messwertsatz, welcher zu einem bestimmten Zeitpunkt ermittelt wurde, übertragen wird. Auf diese Weise wird eine große Energieeinsparung auf der Sekundärseite erreicht. Weiterhin kann die Rechenkapazität auf der Seite des Implantats bzw. der Sekundäreinrichtung eingeschränkt werden, so dass ein Energieverbrauch bis zum Faktor 100 verringert werden kann. Weiterhin ist die Regelung auch robuster, da ein Verbindungsabriss keine relevante Störung der Regelung nach sich zieht. Damit erhöht sich die Sicherheit. Dies kann insbesondere bei Implantaten als Sekundäreinrichtung von Interesse sein.

Bei typischen Ausführungsbeispielen ist der Außendurchmesser der Sekundärspule kleiner als 10cm oder kleiner als 4cm. Kleine Spulengrößen erleichtern eine Implantierbarkeit. Bei üblichen Ausführungsbeispielen ist der Außendurchmesser der Primärspule kleiner als 30cm, typischerweise kleiner als 10cm, oder kleiner als 4cm. Die Primäreinrichtung ist typischerweise tragbar ausgeführt. Kleine Primärspulendurchmesser ermöglichen handliche Geräte, welche von Patienten mitgenommen werden können. Das Verhältnis zwischen Spulenradius und Übertragungsstrecke beträgt an der Stelle der maximalen Kopplung oder des minimalen oder optimalen Abstands der Primärspule zu der Sekundärspule höchstens 10:1, typischerweise höchstens 3:1 oder typischerweise höchstens 1:1. Dies ermöglicht kleine Spulen.

Kurze Beschreibung der Zeichnungen

Weitere Vorteile und Merkmale bevorzugter Ausführungsformen der Erfindung werden nachfolgend anhand der beiliegenden Zeichnungen erläutert, wobei die Figuren zeigen:

Fig. 1    eine schematische Darstellung einer typischen Ausführungsform einer Primäreinrichtung in Kombination mit weiteren Elementen zur Erläuterung der Erfindung; und

Fig. 2    schematisch in einem prinzipiellen Ablaufdiagramm eine Ausführungsform eines typischen Verfahrens.

Beschreibung bevorzugter Ausführungsbeispiele

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt.

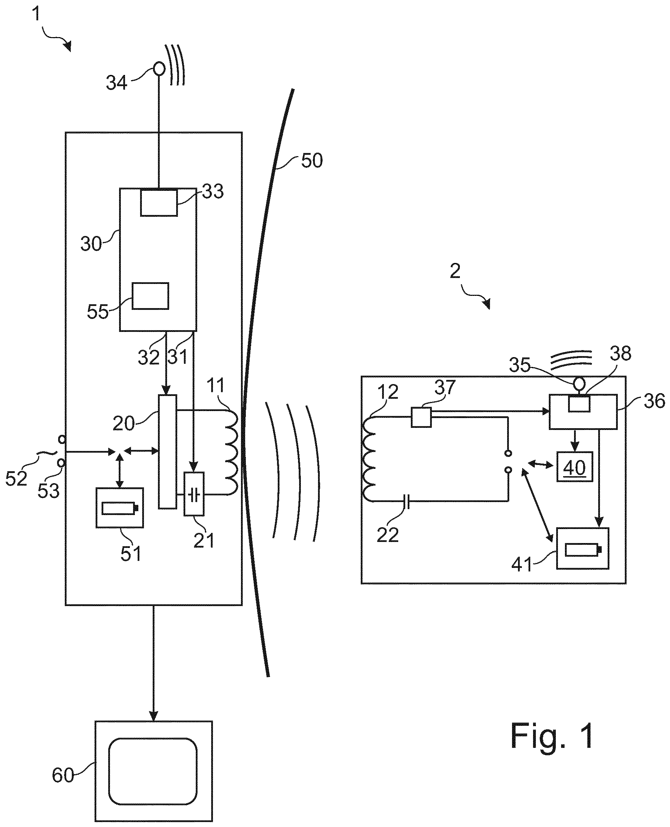

In der Fig. 1 ist eine beispielhafte Ausführungsform gezeigt, welche eine Primäreinrichtung 1 und eine Sekundäreinrichtung 2 umfasst. Die Primäreinrichtung 1 weist einen Primärkreis auf, in welchem eine erste Wicklung 11 angeordnet ist. Die Sekundäreinrichtung 2 weist einen Sekundärkreis auf, in welchem eine zweite Wicklung 12 angeordnet ist.

Bei Ausführungsformen ist die Sekundäreinrichtung dazu vorgesehen, in einer Maschine, beispielsweise an einer schwer zugänglichen Stelle, oder in einem tierischen Körper oder in einem Bereich mit gesundheitsgefährdenden Stoffen angeordnet zu werden. Typische Ausführungsformen der Erfindung sehen insbesondere in der Primäreinrichtung mehr einstellbare, schaltbare oder komplexe Komponenten als in der Sekundäreinrichtung vor, um die Sekundäreinrichtung so einfach wie möglich zu gestalten. Bei weiteren Ausführungsformen sind jedoch auch in der Sekundäreinrichtung schaltbare Komponenten vorgesehen. Sekundäreinrichtungen typischer Ausführungsformen sind implantierbar oder dazu vorgesehen, innerhalb eines menschlichen Körpers oder eines tierischen angeordnet zu werden.

Der Primärkreis weist einen Sendeverstärker 20 mit H-Brückenschaltung auf, welcher typischerweise eine Einstellung der Sendefrequenz ermöglicht. Der Primärkreis weist außerdem im Hauptschluss eine einstellbare Kapazität 21 auf, welche im dargestellten Ausführungsbeispiel als Kondensatormatrix ausgeführt ist. Die Kondensatormatrix weist eine 6-Bit-Schaltung auf, sodass 64 mögliche Kapazitätswerte angesteuert werden können. Bei typischen Ausführungsformen reicht eine 6-Bit-Matrix aus, um eine ausreichende Einstellbarkeit der Resonanzfrequenz des Primärkreises mit der einstellbaren Kapazität 21 und der ersten Wicklung 11 zu gewährleisten. Bei weiteren Ausführungsformen ist eine 7-Bit-Matrix oder mit noch mehr Möglichkeiten ausgestattete Matrix vorgesehen. Weiterhin ist auch möglich, einen stufenlos einstellbaren Kondensator zu verwenden oder eine Kondensatormatrix mit weniger Schaltmöglichkeiten. Der Vollständigkeit halber wird noch auf den zweiten Kondensator 22 des Sekundärkreises hingewiesen, welcher bei typischen Ausführungsformen eine fixe Kapazität aufweist. Auf diese Weise kann die Sekundäreinrichtung 2 möglichst einfach gestaltet werden. Alternativ ist es jedoch auch möglich, auf der Sekundärseite an Stelle des fixen zweiten Kondensators 22 ebenso eine Kondensatormatrix oder einen einstellbaren Kondensator zu verwenden.

Zur Kontrolle, das heißt zum Überwachen, Regeln oder Steuern, verschiedener Funktionen der Primäreinrichtung 1 und gegebenenfalls auch der Sekundäreinrichtung 2 umfasst die Primäreinrichtung 1 eine Kontrolleinheit 30. Die Kontrolleinheit 30 kann über Signalausgänge 31 und 32 die Sendefrequenz des Verstärkers 20 als auch die Kapazität der Kondensatormatrix 21 einstellen. Weiterhin umfasst die Kontrolleinheit 30 eine Radiofrequenz-Übertragungseinheit 33, welche über eine erste Antenne 34 über Radiofrequenzwellen kommunizieren kann. Analog hierzu weist die Sekundäreinrichtung eine zweite Radiofrequenzantenne 35 auf, welche mit einer zweiten Übertragungseinheit 38 verbunden ist, die in einem Kontrollblock 36 angeordnet ist. Der Kontrollblock 36 ist Teil der Sekundäreinrichtung 2 und dient insbesondere dazu, den Strom im Sekundärkreis über einen Stromsensor 37 zu erfassen. Weiterhin ist der Kontrollblock 36 dazu geeignet, eine Verbindung des Sekundärkreises mit einer Last 40 oder eine Verbindung des Sekundärkreises mit einer zweiten Batterie 41 herzustellen.

Typische Ausführungsformen weisen eine Last oder mehrere verschiedene Lastmodule auf. Eine typische Last ist beispielsweise eine Pumpe, ein Aktuator, ein Impulsgeber oder ein Antrieb für einen Stellantrieb, jeweils insbesondere zum Einsatz in gefährlicher Umgebung oder implantierbar ausgestaltet.

Die Sekundäreinrichtung 2 ist bei dem Ausführungsbeispiel der Fig. 1 von der Primäreinrichtung 1 aus betrachtet hinter einer physikalischen Grenzfläche 50, beispielsweise einer Oberfläche eines Körpers, eines Schutzraumes oder einer Maschine angeordnet. Die Primäreinrichtung 1 kann mit der ersten Wicklung 11 auf der vorgegebenen Fläche 50 bewegt werden, um eine Energieübertragung von der ersten Wicklung 11 auf die zweite Wicklung 12 und damit von der Primäreinrichtung 1 zu der Sekundäreinrichtung 2 zu verbessern. In welcher Abfolge solche Bewegungen bei typischen Ausführungsformen vorgesehen sein können, wird im Zusammengang mit typischen Verfahren erläutert.

Die Primäreinrichtung 1 verfügt weiterhin über eine erste Batterie 51, welche wie die zweite Batterie 41 wieder aufladbar ist. Allerdings ist die erste Batterie 51 mit einer wesentlich größeren Kapazität, typischerweise mit einer mindestens 3-fachen oder 10-fachen Kapazität, ausgestattet als die zweite Batterie 41. Bei typischen Ausführungsbeispielen dient die zweite Batterie 41 dazu, lediglich kurze Zeitspannen zu überbrücken, beispielsweise während der einer Energieübertragung problematisch ist. Die erste Batterie 51 hingegen kann auch dazu verwendet werden, um über einen längeren Zeitraum, während dem die Primäreinrichtung 1 nicht mit einem öffentlichen Versorgungsnetz 52 verbunden ist, die Energieversorgung der gesamten Vorrichtung sicherzustellen. Die Primäreinrichtung 1 umfasst Anschlüsse 53, mit welchen sie an das öffentliche Versorgungsnetz 52 angeschlossen werden kann, beispielsweise zum Betrieb der gesamten Primäreinrichtung 1 und damit über die Energieübertragungsstrecke auch der Sekundäreinrichtung 2 oder auch zum Wiederaufladen der ersten Batterie 51. Die erste Batterie oder das öffentliche Netz stellen die Energieversorgung der Primäreinrichtung dar. Weiterhin umfasst die Primäreinrichtung einen in der Kontrolleinheit 30 angeordneten Speicher 55, beispielsweise zum Speichern von Funktionen oder Parametern der Primäreinrichtung 1 und der Sekundäreinrichtung 2. Die Kontrolleinheit ist außerdem dazu eingerichtet, eine Gegeninduktivität und eine Übertragungsfunktion mit den in dieser Anmeldung beschriebenen Formeln durchzuführen.

Die Primäreinrichtung 1 ist mit einer Auswerteinheit 60 verbindbar, über welche optische oder akustische Anweisungen zur Positionierung der Primäreinrichtung 1 auf der Grenzfläche 50 an einen Benutzer ausgegeben werden können. Weiterhin können Informationen über eine übertragene Leistung oder über Betriebsparameter wiedergegeben werden.

Die Last von Ausführungsformen kann sich aus unterschiedlichen Gründen vorhersehbar, planbar oder unvorhersehbar ändern. So ist es bei einem Antrieb oder einem Stellmotor möglich, dass sich für unterschiedliche Betriebssituationen, bspw. schnell oder langsam, Beschleunigung oder Abbremsen, unterschiedliche Energieaufnahmen ergeben. Weiterhin kann vorgesehen sein, dass zwischen einem ersten Betriebszustand, bei welchem ein Akku der Sekundäreinrichtung nicht geladen wird, und einem zweiten Betriebszustand, bei welchem der Akku geladen wird, unterschieden wird. Außerdem kann zwischen einem Betriebszustand, bei welchem Netzanschluss der Primäreinrichtung vorliegt und einem Betriebszustand, bei welchem kein Netzanschluss der Primäreinrichtung vorliegt, unterschieden werden. Diese Betriebszustände können durch den Betriebsparameter ausgedrückt werden.

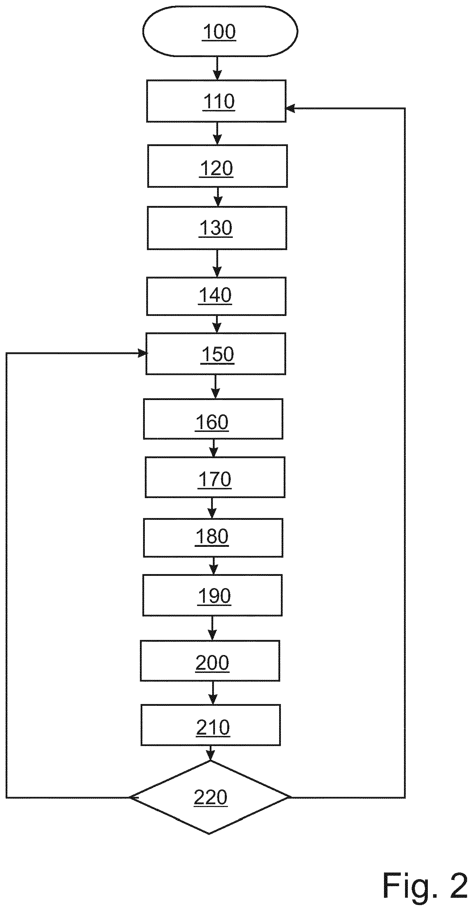

In der Fig. 2 ist ein Ausführungsbeispiel eines Verfahrens gezeigt. Zur Durchführung des Verfahrens wird typischerweise die in der Fig. 1 gezeigte Ausführungsform verwendet. Grundsätzlich ist das Verfahren jedoch auch mit anderen Ausführungsformen durchführbar.

Das Verfahren startet ausgelöst durch eine Energieanforderung oder ausgelöst durch einen Benutzer in einem Block 100. Nachfolgend wird in einem Block 110 ein konstanter Storm für die Primärspule vorgegeben. Beispielsweise können 0,5 Ampere oder auch 1 Ampere als konstanter Strom für die Primärspule im Schritt 110 vorgegeben werden. In einem Block 120 wird anschließend eine Regelung vorgenommen, wobei ein PI-Regler mit dem Sollwert für den konstanten Strom und mit dem gemessenen Istwert des Stroms der Primärspule als Eingangssignal betrieben wird. Das Ausgangssignal des PI-Reglers wird verwendet, um eine Pulsweitenmodulation oder Zwischenkreisspannung einzustellen, so dass sich der Ist-Strom in der Primärspule dem Sollstrom der Primärspule annähert.

In einem nachfolgenden Block 130 wird eine Gegeninduktivität M zwischen der Primärspule und der Sekundärspule berechnet. Bei typischen Ausführungsformen wird die Gegeninduktivität M ausschließlich an Hand von Messwerten, welche an der Primärspule gewonnen werden, berechnet. Typischerweise wird die Gegeninduktivität M ausschließlich anhand des gemessenen Stroms der Primärspule und der an der Primärspule anliegenden Spannung gemessen. Hierzu wird auf die in dieser Anmeldung wiedergegebenen Formeln, welche auch in anderen Formen verwendet werden kann, zurückgegriffen. Bei typischen Ausführungsformen wird nicht auf Messwerte der Sekundärspule zurückgegriffen. Bei weiteren Verfahren kann eine Überprüfung von Berechnungsergebnissen anhand von Messwerten der Sekundärspule vorgenommen werden.

In einem anschließenden Block 140 wird eine Übertragungsfunktion TF nach der hierin angegebenen Formel, welche ebenso umgestellt werden kann, ausgerechnet. Nachfolgend wird mit dem Messen des Primärstroms und der Primärspannung an der Primärspule fortgefahren, Block 150.

Mit den gemessenen Werten wird mit Hilfe der Übertragungsfunktion der Strom der Sekundärspule, das ist der Ist-Sekundärstrom, berechnet (Block 160), wobei beispielsweise die folgenden Übertragungsfunktionen TF_1 und TF_2 verwendet werden können, welche aus den hierin beschriebenen Differenzialgleichungen für U_1(t) und U_2 ableitbar sind:

$$TF_1 = \frac{I_2}{U_1}$$

Im nachfolgenden Block 170 wird eine Spannung auf der Sekundärseite also eine Ist-Sekundärspulenspannung mit folgender Formel berechnet:

$$TF_2 = \frac{U_2}{I_1}$$

In einem Block 180 werden die berechnete Ist-Sekundärspulenspannung mit einer Soll-Sekundärspulenspannung und der berechnete Ist-Sekundärspulenstrom mit einem Soll-Sekundärspulenstrom verglichen, um die Abweichungen $\Delta U_2$, $\Delta I_2$ zu berechnen.

Anschließend werden mit Hilfe der Übertragungsfunktionen TF_1 und TF_2 (siehe oben) die Werte $\Delta U_1$, $\Delta I_1$ aus dem Wertepaar $\Delta U_2$, $\Delta I_2$ ermittelt (Blöcke 190 und 200).

Im Block 210 werden die Sollwerte für den Primärstrom und für die Primärspannung entsprechend angepasst. Bei Ausführungsformen mit lediglich einer regelbaren Größe, Primärstrom oder Primärspannung, wird mit Hilfe der Formeln

$$\Delta P_1 = \Delta U_1 * \Delta I_1$$

und

$$P = I^2 * Z_L$$

Eine Sollwertveränderung für den Primärstrom oder die Primärspannung berechnet, wobei Z_L die Gesamtimpedanz der gekoppelten Schwingkreise ist.

Die Sollwertveränderungen werden jeweils den PI-Reglern zugeführt oder es wird die eine Sollwertänderung dem PI-Regler zu geführt (bei einer regelbaren Größe auf der Primärseite). Auf diese Weise wird die Primärspule mit einer Leistung beaufschlagt, welche dazu führt, dass auf der Sekundärseite an der Spule eine Spannung zumindest im Wesentlichen gleich der Soll-Sekundärspulenspannung anliegt.

Das Verfahren kann mehrfach zum Block 150 zurück springen, um die Regelgüte zu verbessern. Weiterhin kann in einem Block 220 abgefragt werden, ob eine Anforderung von der Sekundäreinrichtung vorliegt, beispielsweise ob die Sekundäreinrichtung eine andere benötigte Leistung braucht oder die Sekundäreinrichtung kann an die Primäreinrichtung Informationen über die übertragene Leistung, welche von der Sekundäreinrichtung überwacht wird, senden. Information über die Änderung der übertragenen Leistung können beispielsweise darauf hindeuten, dass die Position der Primäreinrichtung mit der Primärspule verrückt wurde. Bei typischen Verfahren wird in solch einem Fall eine Anpassung auf der Primärseite vorgenommen, beispielsweise kann der Wert einer Kapazität des Stromkreises der Primärspule verändert werden oder es kann eine Sendefrequenz, mit welcher die Primärspule betrieben wird, verändert werden. Hierzu kann im Block 220 ein Rückkanal verwendet werden von der Sekundäreinrichtung zu der Primäreinrichtung. Das Verfahren springt, falls lediglich beispielsweise mehr Leistung oder weniger Leistung auf der Sekundärseite verlangt wird zurück zum Block 150. Stellt das Verfahren hingegen im Block 220 fest, dass eine Änderung der Übertragungsstrecke eingetreten sein muss, beispielsweise durch ein Verrücken der Primärspule relativ zu der Sekundärspule, so springt das Verfahren zum Block 110 zurück, in welchem nochmals damit begonnen wird, die Gegeninduktivität (Block 130) und die Übertragungsfunktion, Block 140, zu überprüfen.

**Patentansprüche**

1. Verfahren zur drahtlosen Übertragung von Energie, wobei Energie von einer Primäreinrichtung (1) zu einer implantierbaren Sekundäreinrichtung (2) drahtlos übertragen wird, wobei die Sekundäreinrichtung (2) zur Anordnung von der Primäreinrichtung (1) aus betrachtet hinter einer physikalischen Grenzfläche (50) vorgesehen ist und eine Last (40) aufweist, wobei die Last ein Antrieb für einen Stellantrieb ist, der implantierbar ausgestaltet ist, oder wobei die Last ein Aktuator ist, der implantierbar ausgestaltet ist, und wobei die Primäreinrichtung eine Primärspule (11) und die Sekundäreinrichtung (2) eine Sekundärspule (12) zur elektromagnetischen Interaktion mit der Primärspule (11) umfassen, mit einer Regelung, welche umfasst:

   - Messen eines durch die Primärspule (11) fließenden Primärstroms und einer an der Primärspule anliegenden Primärspannung,
   - Berechnen eines Sekundärstroms der Sekundärspule (12) und einer Sekundärspannung der Sekundärspule (12) in Abhängigkeit des gemessenen Primärstroms und der gemessenen Primärspannung,
   - Vergleich des berechneten Sekundärstroms mit einem Sekundärsollstrom und/oder der berechneten Sekundärspannung mit einer Sekundärsollspannung,
   - Vorgabe eines Primärsollstroms und einer Primärsollspannung in Abhängigkeit des Vergleichs, und
   - Betreiben der Primärspule mit der Primärsollspannung und dem Primärsollstrom, um Energie an die Sekundärspule (12) zu übertragen.

2. Verfahren nach Anspruch 1, mit Ermitteln einer Gegeninduktivität der Primärspule (11) zu der Sekundärspule (12) in Abhängigkeit eines vorgegebenen Primärstroms durch die Primärspule und einer an der Primärspule (11) anliegenden Primärspannung, wobei die Übertragungsfunktion zur Berechnung des berechneten Sekundärstroms und/oder der berechneten Sekundärspannung der Sekundärspule (12) verwendet wird.

3. Verfahren nach Anspruch 1 oder 2, mit: Ermitteln einer Übertragungsfunktion in Abhängigkeit der Gegeninduktivität, wobei die Gegeninduktivität zur Berechnung des berechneten Sekundärstroms und/oder der berechneten Sekundärspannung der Sekundärspule (12) verwendet wird

4. Verfahren nach einem der vorhergehenden Ansprüche, wobei die Regelung unabhängig von einer Echtzeitrückführung eines Sekundärstrom-Messwertes und unabhängig von einer Echtzeitrückführung eines Sekundärspannungs-Messwertes erfolgt.

5. Verfahren nach einem der Ansprüche 2 bis 4, wobei die Ermittlung der Übertragungsfunktion und der Gegeninduktivität unabhängig von einer Echtzeitrückführung eines Sekundärstrom-Messwertes und unabhängig von einer Echtzeitrückführung eines Sekundärspannungs-Messwertes erfolgt.

6. Verfahren nach einem der vorhergehenden Ansprüche, wobei von der Sekundäreinrichtung zu der Primäreinrichtung Informationen über eine von der Sekundäreinrichtung benötigte Leistung übertragen werden.

7. Verfahren nach einem der vorhergehenden Ansprüche, wobei von der Sekundäreinrichtung zu der Primäreinrichtung Informationen über eine übertragene Leistung und/oder die Last (40) übermittelt werden.

8. Verfahren nach Anspruch 7, wobei die Sekundäreinrichtung die übertragene Leistung überwacht und bei einer Änderung der übertragenen Leistung eine Informationen über die Änderung der übertragenen Leistung übermittelt.

9. Verfahren nach einem der vorhergehenden Ansprüche, wobei der Vergleich des berechneten Sekundärstroms mit dem Sekundärsollstrom und/oder der berechneten Sekundärspannung mit der Sekundärsollspannung jeweils als Eingangssignal für einen PI-Regler verwendet werden, um den Primärsollstroms und/oder die Primärsollspannung zu ermitteln.

10. Verfahren nach einem der vorhergehenden Ansprüche, wobei die Primärspule (11) mit einem Pulsweiten-Modulationsverfahren angesteuert wird.

11. Vorrichtung zur drahtlosen Energieübertragung mit

- einer Primäreinrichtung (1), die eine Primärspule (11) aufweist,
- eine Sekundäreinrichtung (2), die eine Sekundärspule (12) umfasst, welche für eine elektromagnetische Interaktion mit der Primärspule (11) anordnebar ist, und
- einer Kontrolleinheit (30), welche dazu eingerichtet ist, ein Verfahren nach einem der vorgehenden Ansprüche durchzuführen.

**Claims**

1. Method for wirelessly transmitting energy, in which case energy is wirelessly transmitted from a primary device (1) to an implantable secondary device (2), wherein the secondary device (2) is behind a physical boundary surface (50) as viewed from the primary device (1) and comprises a load (40), wherein the load is a drive for an actuator, which is designed to be implantable, or wherein the load is an actuator, which is designed to be implantable, and in which case the primary device comprises a primary coil (11) and the secondary device (2) comprises a secondary coil (12) for electromagnetic interaction with the primary coil (11), with a control process which comprises:

- measuring a primary current flowing through the primary coil (11) and a primary voltage applied to the primary coil,
- calculating a secondary current of the secondary coil (12) and a secondary voltage of the secondary coil (12) on the basis of the measured primary current and the measured primary voltage,
- comparing the calculated secondary current with a desired secondary current and/or the calculated secondary voltage with a desired secondary voltage,
- predefining a desired primary current and a desired primary voltage on the basis of the comparison, and
- operating the primary coil with the desired primary voltage and the desired primary current in order to transmit energy to the secondary coil (12).

2. Method according to Claim 1, with determination of a mutual inductance of the primary coil (11) with respect to the secondary coil (12) on the basis of a predefined primary current through the primary coil and a primary voltage applied to the primary coil (11), the transfer function being used to calculate the calculated secondary current and/or the calculated secondary voltage of the secondary coil (12).

3. Method according to Claim 1 or 2, with: determination of a transfer function on the basis of the mutual inductance, the mutual inductance being used to calculate the calculated secondary current and/or the calculated secondary voltage of the secondary coil (12).

4. Method according to one of the preceding claims, the control process being carried out independently of real-time feedback of a secondary current measured value and independently of real-time feedback of a secondary voltage measured value.

5. Method according to one of Claims 2 to 4, the transfer function and the mutual inductance being determined independently of real-time feedback of a secondary current measured value and independently of real-time feedback of a secondary voltage measured value.

6. Method according to one of the preceding claims, information relating to a power required by the secondary device being transmitted from the secondary device to the primary device.

7. Method according to one of the preceding claims, information relating to a transmitted power and/or the load (40) being transmitted from the secondary device to the primary device.

8. Method according to Claim 7, the secondary device monitoring the transmitted power and, in the event of a change in the transmitted power, transmitting an item of information relating to the change in the transmitted power.

9. Method according to one of the preceding claims, the comparison of the calculated secondary current with the desired secondary current and/or the calculated secondary voltage with the desired secondary voltage respectively being used as an input signal for a PI controller in order to determine the desired primary current and/or the desired primary voltage.

10. Method according to one of the preceding claims, the primary coil (11) being controlled with a pulse-width modulation method.

11. Apparatus for wirelessly transmitting energy, having

- a primary device (1) which has a primary coil (11),
- a secondary device (2) which comprises a secondary coil (12) which can be arranged for electromagnetic interaction with the primary coil (11), and
- a checking unit (30) which is set up to carry out a method according to one of the preceding claims.

**Revendications**

1. Procédé de transmission sans fil d'énergie, dans lequel l'énergie est transmise sans fil d'un dispositif primaire (1) à un dispositif secondaire implantable (2), dans lequel le dispositif secondaire (2) est prévu pour être disposé, vu depuis le dispositif primaire (1), derrière une interface physique (50) et présente une charge (40), dans lequel la charge est un entraînement pour un actionneur qui est conçu de manière implantable, ou dans lequel la charge est un actionneur qui est conçu de manière implantable, et dans lequel le dispositif primaire comprend une bobine primaire (11) et le dispositif secondaire (2) comprend une bobine secondaire (12) pour une interaction électromagnétique avec la bobine primaire (11), avec une régulation qui comprend le fait de:

- mesurer un courant primaire circulant dans la bobine primaire (11) et une tension primaire appliquée à la bobine primaire,
- calculer un courant secondaire de la bobine secondaire (12) et une tension secondaire de la bobine secondaire (12) en fonction du courant primaire mesuré et de la tension primaire mesurée,
- comparer le courant secondaire calculé avec un courant secondaire de consigne et/ou la tension secondaire calculée avec une tension secondaire de consigne,
- prédéterminer un courant primaire de consigne et une tension primaire de consigne en fonction de la comparaison, et
- faire fonctionner la bobine primaire avec la tension primaire de consigne et le courant primaire de consigne pour transmettre de l'énergie à la bobine secondaire (12).

2. Procédé selon la revendication 1, avec le fait de déterminer une inductance mutuelle entre la bobine primaire (11) et la bobine secondaire (12) en fonction d'un courant primaire prédéterminé circulant dans la bobine primaire et d'une tension primaire appliquée à la bobine primaire (11), dans lequel la fonction de transfert est utilisée pour calculer le courant secondaire calculé et/ou la tension secondaire calculée de la bobine secondaire (12).

3. Procédé selon la revendication 1 ou 2, avec le fait de: déterminer une fonction de transmission en fonction de l'inductance mutuelle, dans lequel l'inductance mutuelle est utilisée pour calculer le courant secondaire calculé et/ou la tension secondaire calculée de la bobine secondaire (12).

4. Procédé selon l'une des revendications précédentes, dans lequel la régulation a lieu de manière indépendante d'une rétroaction en temps réel d'une valeur de mesure de courant secondaire et de manière indépendante d'une rétroaction en temps réel d'une valeur de mesure de tension secondaire.

5. Procédé selon l'une des revendications 2 à 4, dans lequel la détermination de la fonction de transmission et de l'inductance mutuelle a lieu de manière indépendante d'une rétroaction en temps réel d'une valeur de mesure de courant secondaire et de manière indépendante d'une rétroaction en temps réel d'une valeur de mesure de tension secondaire.

6. Procédé selon l'une des revendications précédentes, dans lequel sont transmises, du dispositif secondaire au dispositif primaire, des informations relatives à une puissance requise par le dispositif secondaire.

7. Procédé selon l'une des revendications précédentes, dans lequel sont déterminées les informations relatives à une puissance et/ou la charge (40) transmise du dispositif secondaire au dispositif primaire.

8. Procédé selon la revendication 7, dans lequel le dispositif secondaire surveille la puissance transmise et détermine, en cas de modification de la puissance transmise, des informations sur la modification de la puissance transmise.

9. Procédé selon l'une des revendications précédentes, dans lequel la comparaison du courant secondaire calculé avec le courant secondaire de consigne et/ou la comparaison de la tension secondaire calculée avec la tension secondaire de consigne sont utilisées respectivement comme signal d'entrée pour un régulateur PI pour déterminer le courant primaire de consigne et/ou la tension primaire de consigne.

10. Procédé selon l'une des revendications précédentes, dans lequel la bobine primaire (11) est entraînée par un procédé de modulation de largeur d'impulsion.

11. Dispositif de transmission sans fil d'énergie, avec

- un dispositif primaire (1) présentant une bobine primaire (11),
- un dispositif secondaire (2) comprenant une bobine secondaire (12) qui peut être disposée pour une interaction électromagnétique avec la bobine primaire (11), et
- une unité de commande (30) qui est conçue pour réaliser un procédé selon l'une des revendications précédentes.

Fig. 1

Fig. 2

**IN DER BESCHREIBUNG AUFGEFÜHRTE DOKUMENTE**

**In der Beschreibung aufgeführte Patentdokumente**

- WO 2009091267 A2
- US 2008082095 A1
- JP 2011045195 A
- US 20100063347 A1